# EUROPÄISCHE PATENTSCHRIFT

(11) **EP 3 124 192 B1**
(45) Veröffentlichungstag und Bekanntmachung des Hinweises auf die Patenterteilung: **22.08.2018**
(21) Anmeldenummer: 16181098.1
(22) Anmeldetag: 25.07.2016
(51) Int. Cl.: B27N 1/00, B27N 3/00, B29B 9/04, B29B 9/14

(54) **VERFAHREN ZUR HERSTELLUNG EINES SPRITZGIESS- ODER EXTRUDIERFÄHIGEN GRANULATS**
METHOD FOR MANUFACTURING AN INJECTION MOULDING OR EXTRUDABLE GRANULATE
PROCEDE DE FABRICATION D'UN GRANULE POUVANT ETRE MOULE PAR INJECTION OU EXTRUDE

(30) Priorität: 27.07.2015 DE 102015112189; 24.09.2015 DE 102015116185
(43) Veröffentlichungstag der Anmeldung: 01.02.2017
(73) Patentinhaber: Fraunhofer-Gesellschaft zur Förderung der angewandten Forschung e.V., 80686 München (DE)
(72) Erfinder: Schirp, Arne, 38102 Braunschweig (DE); Thole, Volker, 38102 Braunschweig (DE)
(74) Vertreter: Stornebel, Kai

(56) Entgegenhaltungen:
- EP-A1- 1 721 715
- WO-A1-2011/002314
- DE-A1- 10 140 305
- JP-A- 2008 284 729

## Beschreibung

Die Erfindung betrifft ein Verfahren zur Herstellung eines spritzgieß- oder extrudierfähigen Granulats, bei dem zumindest eine Folie und Lignocellulosepartikel miteinander verpresst werden, so dass die zumindest eine Folie aufschmilzt und sich mit den Lignocellulosepartikeln zu einem plattenförmigen Werkstoff, insbesondere als Zwischenprodukt, verbindet.

Im Refiner-Prozess hergestellte Holzfaserstoffe lassen sich aufgrund ihrer geringen Schüttdichte und mangelnder Dosierfähigkeit nicht mit der gewünschten und erforderlichen Prozesssicherheit unmittelbar zur Herstellung von Holz-Polymer-Werkstoffen, sogenannten WPC, verwenden. Um durch eine Erhöhung der Schüttdichte die Dosierfähigkeit zu verbessern, erfolgt häufig zunächst eine Komponentenmischung und Komponentenagglomeration über Heiz-Kühlmischer, Ringmatrizenpressen und Compoundierextrudern, wobei neben Holzfasern auch spanförmige oder kubische Partikel eingesetzt werden können. Diese Compoundierungen sind mit einer thermischen Belastung verbunden, die zu pyrolytischen und hydrolytischen Schädigungen führt. Das Festigkeitspotenzial der verwendeten Partikel wird dadurch herabgesetzt.

In der DE 11 52 539 A1 wird eine anti-elektrostatische Formmasse aus Polyolefinen beschrieben, die sich zur Verwendung in einem Spritzgussverfahren eignet.

Die DE 20 17 225 A1 beschreibt die Verwendung eines Planetwalzen-Extruders zur kontinuierlichen Überführung von Elastomer-Mischungen in Granulatform.

Die DE 23 59 687 A1 betrifft Schichtstoffplatten mit einer Papieroberschicht, Lignocellulosefasern, einem Vlies in einer Mittellage sowie einer thermoplastischen Folie auf der Unterseite. Eine solche Schichtstoffplatte wird zu dekorativen Zwecken eingesetzt.

Die DE 42 41 834 A1 betrifft die Herstellung von Holzwerkstoffplatten mit einer Papieraußenseite und einer oberflächenveredelnden Beschichtung, wobei auf dem Trägermaterial zunächst eine thermoplastische Kunststofffolie aufgebracht wird. Die Holzwerkstoffplatte wird zur Verwendung in der Möbel- und Plattenindustrie hergestellt.

Die DE 196 19 892 A1 betrifft ein Verbundmaterial aus mehreren Schichten, wobei mindestens eine der Schichten eine Festigkeitsschicht bildet und mindestens eine weitere Schicht ganz oder teilweise aus Perlen besteht.

Die DE 10 2007 054 549 A1 betrifft die Herstellung von WPC aus Holz, Kunststoffen und Additiven. Zur Herstellung der WPC werden die Komponenten zunächst in einem geschlossenen System vermischt, um im Holzrohstoff enthaltenes Wasser zu verdampfen. Danach wird durch weitere Einleitung von Reibungswärme die Oberfläche des Holzrohstoffes aktiviert und dessen Reaktionsvermögen gesteigert, wobei durch Verwendung von festem Kunststoff dieser durch die Reibungswärme aufgeschmolzen wird. Die Kunststoffschmelze wird zu einem homogenen Naturfaser-Kunststoff-Verbundwerkstoff compoundiert.

Die DE 10 2011 004 717 A1 betrifft eine Holz-Kunststoffkombination mit einem WPC-Substrat in Verbindung mit einer Schicht und/oder einer Füllung aus partikularem und/oder faserförmigem, verwobenem Material.

Die DE 10 2012 104 375 A1 betrifft ein Verfahren und eine Vorrichtung zur Herstellung eines WPC-Compounds über einen Compound-Extruder oder einen Heiz-Kühl-Mischer. Die einzelnen Komponenten aus Lignocellulosefasern und Kunststoffen werden vermischt und unter Ausnutzung der im Heizmischer eingebrachten Prozesswärme zu einem Granulat weiterverarbeitet.

Die CA 2,407,880 C betrifft die Herstellung von Holzwerkstoffplatten mit zwischengelegten Kunststofffolien.

Die JP-A-2008-284729 A beschreibt ein Verfahren zum Herstellen von faserenthaltenden Harzpellets, bei dem Fasern zwischen zwei Lagen von Harzfolien in einem Heißpressverfahren eingeschlossen werden. Anschließend wird die Faser-Compound-Folie in Form von Pellets zerschnitten.

Die WO 2011/002314 A1 betrifft ein Verfahren zum Herstellen eines Holzwerkstoffproduktes mit Lignocellulosefasern und einem Kunststoffmaterial, das einen flüssigen oder teilchenförmigen Binder mit einem wärmeaktivierbaren Harz und einem thermoplastischen Polymer, Monomer oder Olgomer verwendet. Das Produkt kann zerkleinert werden, um Pellets oder ein Granulat zu erzeugen.

Die EP 1 721 715 A1 betrifft ein Verfahren zur Herstellung einer Holzwerkstoffplatte, bei dem mit Harz beleimte Holzspäne oder Holzfasern in mehreren Lagen zu einem Span- oder Faserkuchen gestreut werden und die Holzspäne unter Aufbringung von Temperatur und Druck miteinander verpresst werden. Zwischen den Lagen kann vor dem Verpressen zumindest eine lagenförmige Werkstoffeinlage eingebracht und mit den Holzfasern oder Holzspänen verpresst werden. Unter die erste Lage und/oder auf die letzte Lage des Span- oder Faserkuchens kann eine Auflage gelegt und zusammen mit den Spänen oder Fasern verpresst werden. Die Auflage kann eine Papierlage aufweisen.

Die DE 101 40 305 A1 betrifft ein Verfahren zur Herstellung im wesentlich biologisch abbaubarer Gegenstände, bei dem eine ebene, geschichtete Bahn, die aus wenigstens zwei Schichten besteht, hergestellt wird. Eine Kissenschicht, die aus Zellulosefasern besteht, wird in einem Airlaid-Verfahren gelegt und unter Hochdruck zu einer saugfähigen Bahn teilweise fusioniert. Auf wenigstens einer Seite der Kissenschicht wird eine thermoplastische und wasser-resistente Folienschicht aufgelegt, wobei mit einem auf die Schmelztemperatur der Folienschicht aufgeheizten Werkzeug auf die Bahn unter Druckanwendung eingewirkt wird. Die Folienschicht verbindet sich mit der Kissenschicht und versteift sich unter Vernetzung und/oder Versprödung gegenüber dem Ursprungszustand. Anschließend werden Gegenstände durch Abtrennen von geformten Bereichen der Bahn vereinzelt.

Problematisch ist die Weiterverarbeitung von Gemischen aus Lignocellulosefasern und Kunststoffen, insbesondere um daraus Formteile in einer definierten Zusammensetzung herstellen zu können.

Aufgabe der vorliegenden Erfindung ist es daher, ein Verfahren zur Herstellung eines spritzgieß- oder extrudierfähigen Granulats bereitzustellen, mit dem auf eine einfache, prozesssichere Art und Weise Holzwerkstoffe hergestellt und ggf. in eine dosierfähige, mit Polymeren und Additiven ausgerüstete Form für die Weiterverarbeitung weiterverarbeitet werden können.

Erfindungsgemäß wird diese Aufgabe durch ein Verfahren mit den Merkmalen des Hauptanspruches gelöst. Vorteilhafte Ausgestaltungen und Weiterbildungen der Erfindung sind in den Unteransprüchen sowie der Beschreibung offenbart.

Das Verfahren zur Herstellung eines spritzgieß- oder extrudierfähigen Granulats, bei dem zumindest eine Folie und Lignocellulosepartikel miteinander verpresst werden, so dass die zumindest eine Folie aufschmilzt und sich mit den Lignocellulosepartikeln zu einem plattenförmigen Werkstoff verbindet, sieht vor, dass der plattenförmige Werkstoff als Zwischenprodukt anschließend zu einem Granulat verarbeitet wird. Das Zwischenprodukt wird in einem kontrollierten Verfahren mit bekannten Ausgangsstoffen hergestellt, wodurch eine definierte Zusammensetzung von Folie und Lignocellulosepartikeln erreicht werden kann. Das Aufstreuen von Lignocellulosepartikeln auf der Folie bzw. das Auflegen der Folie auf aufgestreute Lignocellulosepartikel kann mengenmäßig einfach und präzise gesteuert werden. Die Lignocellulosepartikel werden auf der Folie fixiert, indem die Folie aufgeschmolzen wird und sich mit den Lignocellulosepartikeln zu einem handhabbaren, mehr oder weniger formstabilen Zwischenprodukt verbindet. Die anschließende Zerkleinerung zu einem Granulat stellt sicher, dass die einzelnen Granulatpartikel oder Teilchen eine definierte und gleichbleibende Zusammensetzung und ein definiertes gleichbleibendes Verhältnis der jeweiligen Materialien zueinander haben.
Eine Weiterbildung der Erfindung sieht vor, dass das Zwischenprodukt für die Granulatherstellung kontinuierlich hergestellt wird, beispielsweise indem die Folie auf ein Transportband aufgelegt, die Lignocellulosefasern oder Lignocellulosepartikel aufgestreut und anschließend miteinander verpresst werden. Dadurch wird eine wesentliche höhere Produktionsmenge bereitgestellt, da keine Taktzeiten einzuhalten sind. Je nach Anlagenbreite können Produktionsmengen von 30 bis 1000 kg/h ohne weiteres produziert werden.

Die Erfindung sieht vor, dass mehrere Lagen Lignocellulosepartikel verarbeitet werden und zwei Lagen Lignocellulosepartikel durch zumindest eine Folie voneinander getrennt sind. Es besteht die Möglichkeit, zunächst eine Lage Lignocellulosepartikel aufzustreuen, zumindest eine Folie aufzulegen und diese Folie dann durch eine weitere Lage Lignocellulosepartikel zu bestreuen oder abzudecken. Alternativ kann eine erste Folienlage, die auch aus mehreren Einzelfolien bestehen kann, abgerollt oder aufgelegt werden, mit einer Schicht Lignocellulosepartikel bestreut und anschließend mit einer weiteren Folienlage oder einer einzelnen Folie abgedeckt werden, auf die wiederum eine Schicht Lignocellulosepartikel aufgestreut oder aufgebracht wird. Auch diese obere Schicht kann durch eine Folie wiederum abgedeckt werden, so dass sich ein mehrschichtiger, zumindest dreischichtiger Aufbau ergibt.

Als Lignocellulosepartikel können Holzfasern, Hanffasern, Späne, Stäube, weitere NaturNaturfasern und/oder lignocellulosehaltige Recyclingstoffe verwendet werden. Darüber hinaus können Naturfasern, wie Flachs, Holzmehl, Frässtäube und andere lignocellulosehaltige Rohstoffe verwendet werden. Grundsätzlich ist es auch vorgesehen und möglich, Holzwerkstoffplatten nach einer entsprechenden Aufarbeitung wiederzuverwenden.

Eine Weiterbildung der Erfindung sieht vor, dass eine Schicht Lignocellulosepartikel auf einer Folie aufgestreut und mit zumindest einer weiteren Folie abgedeckt wird. Dadurch wird die Schicht der Lignocellulosepartikel zwischen zwei Folien oder Folienlagen, die aus mehreren Folien bestehen können, aufgenommen und durch Druck und Wärme sandwichartig auf ihren Hauptseiten abgedeckt. Die Schichtanzahl ist grundsätzlich nicht begrenzt, es ist vorteilhaft, wenn sowohl die unterste als auch die oberste Schicht des Zwischenproduktes eine Folie oder eine Folienlage ist, um einen Abschluss und eine Schutzschicht auf den Außenseiten der Hauptflächen zu erreichen.

Die Lignocellulosepartikel werden in einer Ausführungsform des Verfahrens über Streuköpfe auf die in einer Förderrichtung transportierte Folie aufgestreut, so dass bei statischen Streuköpfen die Lignocellulosepartikel auf die Folie oder Folienlage aufgestreut und durch eine Fördereinrichtung, die die Folie oder Folienlage in einer Förderrichtung transportiert, unter dem Streukopf weggezogen werden. Dadurch wird erreicht, dass über die vorteilhafterweise gesamte Breite der Folie oder Folienlage und über die gesamte Länge der Folie oder Folienlage eine gleichmäßige Dichte und Dicke an Lignocellulosepartikeln aufgestreut werden.

Eine Weiterbildung der Erfindung sieht vor, dass Lignocellulosepartikel durch eine Förderrichtung hintereinander angeordneter Streuköpfe aufgetragen werden. Vorteilhafterweise werden unterschiedliche Lignocellulosepartikel in den Streuköpfen aufgetragen, wobei gewährleistet wird, dass die jeweiligen Lignocellulosepartikel homogen und von definierter Qualität sind. Über die verschiedenen Streuköpfe ist es möglich, während der Herstellung unterschiedliche Zusammensetzungen an Lignocellulosepartikeln herzustellen und aufzustreuen, ohne die Beschickung der jeweiligen Streuköpfe ändern zu müssen. Werden mehrere verschiedene Lignocellulosepartikel aufbereitet bereitgestellt, können unterschiedliche Mischungen mit unterschiedlichen Eigenschaften der Lignocellulosepartikel aufgestreut werden, so dass durch eine Variation der Menge der jeweils aufgestreuten Partikel sowie durch eine Auswahl, welche Partikel aufgestreut werden, die Eigenschaften des hergestellten Granulats verändert werden können. Auch ist es möglich, gleichartige Lignocellulosepartikel über mehrere hintereinander angeordnete Streuköpfe aufzubringen, um Streudicken herzustellen, die mit einem einzelnen Streukopf nicht verwirklicht werden können. Es ist möglich, zwischen den jeweiligen Streuköpfen einen Folieneinzug vorzusehen, so dass die einzelnen Schichten der Lignocellulosepartikel voneinander getrennt werden. Ebenso ist es möglich, dass erst nach zwei oder mehreren Streuköpfen eine weitere Folie oder Folienlage eingezogen wird, um die Variabilität in der Zusammensetzung der jeweils durch die Folien oder Folienlagen getrennten Lignocellulosepartikelschichten zu gewährleisten.

Eine Weiterbildung des Verfahrens sieht vor, dass mehrere unterschiedliche Folien übereinander oder durch Lignocellulose voneinander getrennt verwendet werden, um die Eigenschaften des plattenförmigen Werkstoffes oder des herzustellenden Granulats zu beeinflussen. Es können unterschiedlich dicke Folien aus demselben Material verwendet werden, ebenso ist es möglich, unterschiedliche Materialien gleicher oder unterschiedlicher Materialstärke zu verwenden, um eine Anpassung der Verarbeitungseigenschaften sowie der mechanischen Eigenschaften des plattenförmigen Werkstoffes oder des herzustellenden Granulats durch eine Veränderung der verwendeten Folien zu ermöglichen. Je nach gewünschter Eigenschaft des Granulats können mehrere Folien zu einer Folienlage kombiniert und auf die jeweilige Schicht Lignocellulosepartikel aufgelegt werden bzw. als Unterlage für eine Schicht Lignocellulosepartikel dienen.

Die Lignocellulosepartikel können vor dem Aufstreuen beispielsweise mit einem Haftvermittler, einem Klebstoff und/oder einem Flammschutzmittel beaufschlagt werden, um die Flammschutzwirkung des plattenförmigen Werkstoffes, der Granulate und der daraus hergestellten Teile zu verbessern. Die Lignocellulosepartikel können auch mit Klebstoffen, beispielsweise Isocyanaten beaufschlagt werden, um eine verbesserte Haftung der Lignocellulosepartikel, z. B. von Holzfaserstoffen, mit den Folien zu erreichen, wobei bei der Verwendung von Klebstoffen diese bevorzugt in einer Blowline vor dem Aufstreuen der Lignocellulosepartikel den Partikeln zugeführt werden. Grundsätzlich ist es auch möglich, alternative Haftvermittler, wie maleinsäureanhydrid-gepfropftes Polyethylen oder maleinsäureanhydrid-gepfropftes Propylen (MAPE oder MAPP), einzusetzen. Auch die Haftvermittler ebenso wie die Flammschutzmitte, wie z. B. Ammoniumpolyphosphat werden, vor dem Aufstreuen in einer Blowline den Lignocellulosepartikeln zugeführt und diese mit den jeweiligen Mitteln beaufschlagt. Grundsätzlich ist es auch möglich, dass die Folien oder Folienlagen mit bekannten Flammschutzmitteln ausgerüstet werden.

Das Zwischenprodukt und der plattenförmige Werkstoff werden bevorzugt kontinuierlich in einer Rollenpresse oder einer Bandpresse unter Zufuhr thermischer Energie hergestellt, wobei die ursprüngliche Schichthöhe massiv verringert wird. Das Material der Folien schmilzt auf, verbindet sich mit den Lignocellulosepartikeln und ergibt dann nach dem Verpressen und gegebenenfalls Erkalten einen plattenförmigen Werkstoff oder ein plattenartiges oder plattenförmiges Zwischenprodukt, das anschließend zu einem Granulat zerkleinert wird.

Als Folie kann eine thermoplastische Kunststofffolie auf der Basis von Polyolefinen verwendet werden. Hierzu sind beispielsweise Polypropylen, Polyethylen oder Polyvinylchlorid geeignet. Ebenfalls ist es möglich, Polykondensate, wie z. B. Polyethylenterephthalat (PET) als synthetische Kunststofffolien einzusetzen. Alle Folien können auch aus Recyclingströmen stammen. Neben thermoplastischen Kunststofffolien können die Folien auch aus Naturstoffen bzw. Biokunststoffen hergestellt werden, beispielsweise aus Polymilchsäure (PLA), Polyhydroxyalkanoaten (PAA, PHB), Celluloseacetat oder Stärke.

Die Lignocellulosefasern können mit einem Gewichtsanteil von 10% bis 90% der Gesamtmasse des Zwischenprodukts aufgebracht werden, wobei die Folie bzw. die Folien den Rest der gesamten Masse ergeben.

Vorteilhafterweise wird das Zwischenprodukt zu einem Granulat mit definierten Abmessungen zerkleinert, um eine präzise Dosierung des Granulates beispielsweise bei Mischung mit anderen Materialien, zu erreichen. Das Granulat kann aus dem Zwischenprodukt ausgestanzt, ausgesägt, ausgeschnitten oder ausgebrochen werden. Ebenso ist es möglich, die jeweiligen Zerkleinerungsverfahren miteinander zu kombinieren, beispielsweise das Zwischenprodukt zunächst über eine Quetscheinrichtung mit einer Sollbruchstelle zu versehen und anschließend nach dem Erkalten an der Sollbruchstelle zu trennen, beispielsweise durch Abbrechen von Stegen, die dann wiederum auf die gewünschte Länge reduziert werden, beispielsweise durch Schlagmesser, Sägen, Kreismesser oder dergleichen. Die Zerkleinerung des Zwischenproduktes zu einem Granulat mit definierten Abmessungen und bevorzugt definierter Form hat den Vorteil, dass eine sehr exakte Einstellung der Materialeigenschaften gewährleistet werden kann. Das Granulat ist durch die definierte Zusammensetzung und die definierten Mengenanteile durch die Verwendung von Folien und Lignocellulosepartikeln, deren Eigenschaften definiert sind, bekannt. Die Form, Masse und die Materialeigenschaften eines einzelnen Granulatstückes sind somit eindeutig definiert, so dass durch die Verwendung eines sortenreinen Granulats die Materialeigenschaften des daraus hergestellten Produktes festgelegt sind. Die daraus hergestellten Platten, Werkstoffe oder Bauteile, die beispielsweise durch einen Extruder oder im Spritzgießverfahren hergestellt werden, sind bekannt und unterliegen nur außerordentlich geringen Schwankungen. Darüber hinaus ist es bei der Mischung mehrerer Granulate möglich, das Mischungsverhältnis und damit die Eigenschaften des Granulatgemisches ebenfalls präzise zu bestimmen.

Das Granulat zur Verwendung in einem Extrudierprozess weist einen mehrschichtigen Aufbau aus zumindest einer aufschmelzenden Folienschicht und zumindest einer mit der Folienschicht verbundenen Lignocellulosepartikelschicht auf. Es können mehrere Folienschichten oder Folienlagen vorhanden sein, die von einer Lignocellulosepartikelschicht getrennt sind bzw. die die Lignocellulosepartikelschicht oder Lignocellulosepartikelschichten voneinander trennen und abdecken. Durch das Granulat ist eine verbesserte Dosierbarkeit und eine vergrößerte Variabilität und Präzisierung in der Mischung von Extrudierwerkstoffen bei WPC gegeben.

Die erfindungsgemäße Lösung sieht eine kontinuierliche Beschichtung und Verpressung von Holzfaserstoffen bzw. Naturfasern, wie Hanf, Flachs usw. sowie aufschmelzbarer, insbesondere thermoplastischer Folien ggf. mit anschließender Granulierung vor. Das Schichten der Holzfasern bzw. Naturfasern und der aufschmelzenden Folie oder den aufschmelzenden Folien wird in einem kontinuierlichen Verfahren durchgeführt, wobei die übereinandergeschichteten Lagen unter Temperatur und Druck zu einem plattenförmigen Werkstoff oder Zwischenprodukt verpresst werden. Neben synthetischen Kunststoffen können Biopolymere zur Herstellung der Folien verwendet werden, so dass der plattenförmige Werkstoff, das Zwischenprodukt und das Granulat vollständig auf nachwachsenden Rohstoffen basieren. In der Presse wird das darin befindliche Material über die Schmelztemperatur der Folie erwärmt, so dass während des Pressvorganges der aufgeschmolzene Folienwerkstoff die Lignocellulosepartikel durchdringt und somit für eine Formstabilität nach dem Abkühlen sowie eine gute Durchmischung der beiden oder Vielzahl der Komponenten sorgt.

Die kontinuierliche Verarbeitung von Folien und Lignocellulosepartikeln wird ermöglicht, indem die Lignocellulosepartikel über mehrere, hintereinander liegende Streuköpfe aufgetragen werden, wobei zwischen den einzelnen gestreuten Lagen jeweils Folien eingezogen werden können. In einer Ausgestaltung sind drei Schichten vorhanden, wobei die äußeren Lagen zur Erhöhung der Beständigkeit des plattenförmigen Werkstoffes oder Zwischenproduktes idealerweise mit Folien abschließen sollen, so dass die Lage Holzfasern oder Lignocellulosepartikel zwischen den Folien angeordnet ist. Der plattenförmige Werkstoff kann ohne nachfolgende Zerkleinerung im Möbelbau, Innenausbau, beispielsweise für Fußböden oder beim Messebau oder zur Herstellung von Formteilen im Automobilbereich verwendet werden. Er ist formstabil, nachverformbar und in seinen mechanischen Eigenschaften definiert. Er ist wiederholbar herstellbar und kann an die jeweiligen Einsatzzwecke durch Änderung der Menge und Art der Lignocellulosepartikel sowie der Menge und Art der Folien angepasst werden. Es wird somit ein plattenförmiger WPC in einem kontinuierlichen Verfahren hergestellt, nämlich durch kontinuierliches Schichten und Verpressen der Kunststofffolie mit den Lignocellulosepartikeln bzw. der Folien mit den Schichten Lignocellulosepartikeln.

Die Granulate können zu Profilen extrudiert oder spritzgegossen werden. Vorteilhaft ist, dass für die Bereitstellung des Granulats auf der Basis von Lignocellulosepartikeln wie Naturfasern oder Holzfasern sowie einem thermoplastischen Polymer bei dessen Herstellung im Vergleich zu den üblichen Compoundierungsverfahren nur geringe thermische und mechanische Belastungen auf die Lignocellulosepartikel auftreten, also nur geringe Scherkräfte aufgebracht werden, wodurch die strukturelle Integrität der Lignocellulosepartikel, die aus Fasern, Spänen, Stäuben bestehen oder in anderer Form vorliegen können, minimal beeinträchtigt wird. Aufgrund der Infiltration der Lignocellulosepartikel mit dem Kunststoff oder Folienmaterial ist eine sehr gute Durchmischung der unterschiedlichen Komponenten im Granulat vorhanden. Im Herstellungsprozess sowohl für das Zwischenprodukt, den plattenförmigen Werkstoff als auch für das Granulat wird kein formaldehydhaltiger Klebstoff verwendet. Die hergestellten Produkte und verwendeten Werkstoffe setzen somit kein zusätzliches Formaldehyd frei und können problemlos wiederwendet werden, da insbesondere keine duroplastischen Komponenten zur Herstellung des Granulates verwendet werden.

Nachfolgend wird ein Ausführungsbespiel der Erfindung anhand der beigefügten Figuren näher erläutert. Es zeigen:
- Figur 1 -: eine schematische Darstellung einer ersten Stufe der Herstellung des Granulats;
- Figur 2 -: eine schematische Darstellung einer zweiten Stufe der Herstellung; sowie
- Figur 3 -: eine vergrößerte schematische Darstellung eines Granulats.

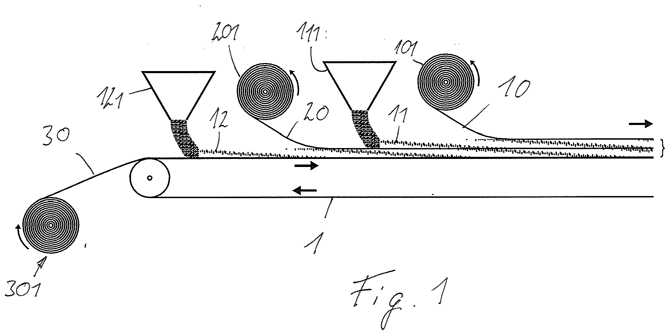

Figur 1 zeigt in einer schematischen Darstellung eine Vorrichtung zum Durchführen des Verfahrens zum Herstellen eines plattenförmigen Werkstoffes sowie eines Granulats, bei dem zunächst auf einem umlaufenden, endlosen Transportband 1 eine untere, erste Folienlage 30 von einer Vorratsrolle 301 abgerollt und auf der Oberseite des Transportbandes 1 aufgelegt wird. Auf diese erste Folienlage 30 wird über einen ersten Streukopf 121 eine erste Lage Lignocellulosepartikel oder -fasern 12 aufgestreut, der erste Streukopf 121 befindet sich in Transportrichtung des Transportbandes 1 hinter der ersten Rolle 301.

Weiter in Transportrichtung hinter dem ersten Streukopf 121 ist eine zweite Rolle 201 mit einer weiteren Folie angeordnet, die abgerollt wird, sodass sich eine zweite Folienlage 20 auf die erste Schicht 12 aus Lignocellulosefasern auflegt und die Lignocellulosefasern oder Lignocellulosepartikel zwischen der ersten Folienlage 30 und der zweiten Folienlage 20 einschließt. Der zweiten Folienrolle 201 ist ein zweiter Streukopf 111 für eine weitere Schicht Lignocellulosepartikel oder Lignocellulosefasern 11 nachgeordnet, die Partikel werden auf die Oberseite der zweiten Folienlage 20 gestreut und abschließend über eine dritte Folienlage 30 von einer dritten Rolle 101 abgedeckt. Die Folienlagen 30, 20, 10 werden im Wesentlichen mit der Transportgeschwindigkeit des Transportbandes 1 abgerollt und zusammen mit dem Transportband 1 in Förderrichtung, die durch den nach rechts gerichteten Pfeil angedeutet ist, transportiert. In dem dargestellten Ausführungsbeispiel ist ein insgesamt fünflagiger Aufbau aus drei aufschmelzenden Folien und zwei Schichten oder Lagen dazwischen angeordneter Lignocellulosepartikel 11, 12 dargestellt, es können grundsätzlich auch mehr Schichten Lignocellulosepartikel oder weitere Folienlagen aufgestreut bzw. aufgelegt werden, ebenfalls können weniger Lagen oder Schichten zur Herstellung von plattenförmigen Werkstoffen oder von Granulat verwendet werden. Das Auflegen der Folien 30, 20, 10 und das Aufstreuen der Lignocellulosepartikel 12,11 geschieht in einem kontinuierlichen Verfahren.

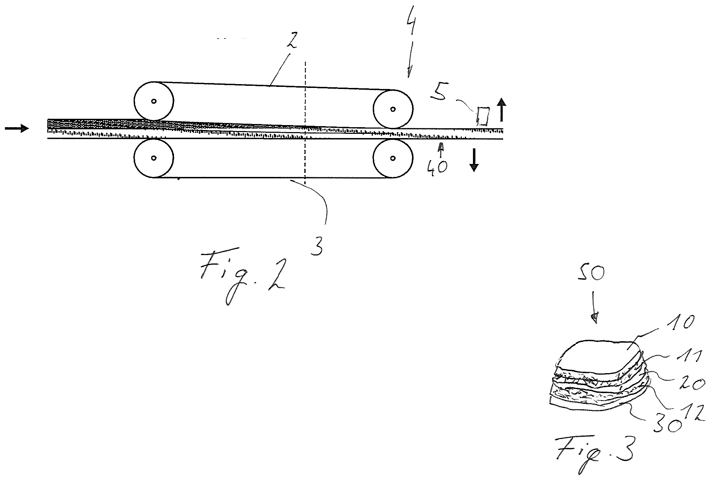

Figur 2 zeigt eine Weiterverarbeitungsphase der Schichtanordnung gemäß Figur 1 nach dem Auflegen der letzten Folienlage 10, bei der der fünflagige Aufbau in Transportgeschwindigkeit des Transportbandes 1 in eine kontinuierlich arbeitende Presse mit unendlichen, um zwei Rollen umlaufenden Pressbändern 2, 3, die kontinuierlich betrieben werden, verpresst wird. Dabei findet im Verlauf der Förderstrecke zwischen den Pressbändern 2, 3 eine Dickenverringerung statt, sodass durch Druck und gegebenenfalls zusätzlich zugefügte Wärmeenergie die lockere Schichtlage aus der Aufstreuvorrichtung komprimiert und verpresst wird. Zumindest eine der Folien 30, 20, 10 schmilzt dabei auf und bildet einen plattenförmigen Werkstoff, indem die Folie oder die Folien sich mit den Lignocellulosepartikeln verbinden. Die umlaufenden Pressbänder 2, 3 können beschichtet sein, um ein Anhaften der Folie oder der Partikel an den Pressbändern 2, 3 zu vermeiden. Als Beschichtung kann beispielsweise PTFE eingesetzt werden. Das Erwärmen der Folien und der Lignocellulosepartikel kann in Förderrichtung in einem vorderen Bereich der kontinuierlich arbeitenden Pressbänder 2, 3 erfolgen, während in einem zweiten Bereich, dem Endbereich 4, eine Abkühlung eingeleitet oder bereits durchgeführt werden kann, sodass am Ende der Pressanlage ein plattenförmiger Werkstoff 40 kontinuierlich aus der Anlage heraus befördert wird. Der plattenförmige Werkstoff 40 kann anschließend entweder quer zur Förderrichtung in die gewünschte Länge zugeschnitten oder einer Weiterverarbeitung wie zum Beispiel einem Aussägen oder Ausstanzen von Granulatelementen zugeführt werden. Die Ablängung oder die Weiterverarbeitung durch Sägen, Stanzen oder dergleichen kann in einer nachgeschalteten Weiterverarbeitungseinrichtung 5 durchgeführt werden, die ebenfalls kontinuierlich arbeitet, sodass von dem Auflegen der ersten Folie 30 bis zum Ausstanzen oder Zerkleinern des plattenförmigen Werkstoffes 40 zur Herstellung von Granulat 50 oder zum Ablängen der gewünschten plattenförmigen Werkstoffe 40 eine kontinuierliche Fertigung vorliegt.

Figur 3 zeigt den schichtweisen Aufbau eines Granulatpartikels 50 mit der untersten Folienlage 30, der ersten Schicht Lignocellulosepartikel 12, der zweiten Folienlage 20, die auf die erste Schicht Lignocellulosepartikel aufgestreut ist und diese erste Schicht 12 von einer zweiten, auf der Oberseite der zweiten Folienlage 20 aufgestreuten Lignocellulosepartikelschicht 11 trennt. Als Abschluss dient die letzte und oberste Folienlage 10. Es ist schematisch dargestellt, dass die Lignocellulosepartikel teilweise in die Folienstruktur eindringen, also dass die Folien 10, 20, 30, die im Herstellverfahren aufgeschmolzen sind, sich unter Druck und in Anwesenheit von Wärme mit den Lignocellulosepartikeln 11, 12 verbunden haben.

## Patentansprüche

1. Verfahren zur Herstellung eines extrudierfähigen Granulats (50), bei dem zumindest eine Folie (10, 20, 30) und Lignocellulosepartikel (11, 12) miteinander verpresst werden, so dass die zumindest eine Folie (10, 20, 30) aufschmilzt und sich mit den Lignocellulosepartikel (11, 12) zu einem plattenförmigen Werkstoff (40) verbindet und der plattenförmige Werkstoff (40) zu einem Granulat (50) verarbeitet wird, **dadurch gekennzeichnet, dass** mehrere Lagen Lignocellulosepartikel (11, 12) verarbeitet werden und zwei Lagen Lignocellulosepartikel (11, 12) durch zumindest eine Folie (10, 20, 30) voneinander getrennt sind.

2. Verfahren nach Anspruch 1, **dadurch gekennzeichnet, dass** als Lignocellulosepartikel (11, 12) Holzfasern, Hanffasern, Späne, Stäube und/oder lignocellulosehaltige Recyclingstoffe verwendet werden.

3. Verfahren nach einem der voranstehenden Ansprüche, **dadurch gekennzeichnet, dass** eine Schicht Lignocellulosepartikel (11, 12) auf eine Folie (30, 20) aufgestreut und mit zumindest einer weiteren Folie (20, 10) abgedeckt wird.

4. Verfahren nach einem der voranstehenden Ansprüche, **dadurch gekennzeichnet, dass** die Lignocellulosepartikel (11, 12) über Streuköpfe (111, 121) auf die in einer Förderrichtung transportierte Folie (30, 20) aufgestreut werden.

5. Verfahren nach Anspruch 4, **dadurch gekennzeichnet, dass** Lignocellulosepartikel (11, 12) durch in Förderrichtung hintereinander angeordnete Streuköpfe (111, 121) aufgetragen werden.

6. Verfahren nach einem der voranstehenden Ansprüche, **dadurch gekennzeichnet, dass** mehrere unterschiedliche Folien (10, 20, 30) übereinander oder durch Lignocellulosepartikel (11, 12) voneinander getrennt verwendet werden.

7. Verfahren nach einem der voranstehenden Ansprüche, **dadurch gekennzeichnet, dass** die Lignocellulosepartikel (11, 12) vor dem Aufstreuen mit einem Haftvermittler, einem Klebstoff und/oder einem Flammschutzmittel beaufschlagt werden.

8. Verfahren nach einem der voranstehenden Ansprüche, **dadurch gekennzeichnet, dass** der plattenförmige Werkstoff (40) in einer Rollenpresse oder einer Bandpresse (2, 3) unter Zufuhr thermischer Energie hergestellt wird.

9. Verfahren nach einem der voranstehenden Ansprüche, **dadurch gekennzeichnet, dass** als Folie (10, 20, 30) eine thermoplastische Kunststofffolie auf der Basis von Polyolefinen oder Polykondensaten oder eine auf Naturstoffen oder Biokunststoffen basierende Folie ist.

10. Verfahren nach einem der voranstehenden Ansprüche, **dadurch gekennzeichnet, dass** Lignocellulosefasern mit einem Gewichtsanteil von 10% bis 90% der Gesamtmasse des plattenförmigen Werkstoffes (40) aufgebracht werden und die Folie oder Folien (10, 20, 30) den jeweiligen Rest der Gesamtmasse ergeben.

11. Verfahren nach einem der voranstehenden Ansprüche, **dadurch gekennzeichnet, dass** das Zwischenprodukt zu einem Granulat (50) mit definierten Abmessungen zerkleinert wird.

12. Verfahren nach einem der voranstehenden Ansprüche, **dadurch gekennzeichnet, dass** das Granulat (50) aus dem plattenförmigen Werkstoff (40) ausgestanzt, ausgesägt, ausgeschnitten oder ausgebrochen wird.

## Claims

1. Method for producing extrudable granules (50) by pressing at least one film (10, 20, 30) and lignocellulose particles (11, 12) with one another, so that the at least one film (10, 20, 30) melts and combines with the lignocellulose particles (11, 12) to form a board-like material (40), and the board-like material (40) is processed into granules (50), **characterized in that** a plurality of plies of lignocellulose particles (11, 12) are processed and two plies of lignocellulose particles (11, 12) are separated from one another by at least one film (10, 20, 30).

2. Method according to Claim 1, **characterized in that** lignocellulose particles (11, 12) used comprise wood fibres, hemp fibres, chips, dusts and/or lignocellulose-containing recycle substances.

3. Method according to either of the preceding claims, **characterized in that** a layer of lignocellulose particles (11, 12) is scattered onto a film (30, 20) and covered with at least one further film (20, 10).

4. Method according to any of the preceding claims, **characterized in that** the lignocellulose particles (11, 12) are scattered via scattering heads (111, 121) onto the film (30, 20) which is transported in a conveying direction.

5. Method according to Claim 4, **characterized in that** lignocellulose particles (11, 12) are applied by scattering heads (111, 121) disposed one after another in conveying direction.

6. Method according to any of the preceding claims, **characterized in that** a plurality of different films (10, 20, 30) are used, one above another or separated from one another by lignocellulose particles (11, 12).

7. Method according to any of the preceding claims, **characterized in that** the lignocellulose particles (11, 12) before being scattered are treated with an adhesion promoter, an adhesive and/or a flame retardant.

8. Method according to any of the preceding claims, **characterized in that** the board-like material (40) is produced in a roller press or a belt press (2, 3) with supply of thermal energy.

9. Method according to any of the preceding claims, **characterized in that** film (10, 20, 30) comprises a thermoplastic polymeric film based on polyolefins or polycondensates or a film based on natural substances or bioplastics.

10. Method according to any of the preceding claims, **characterized in that** lignocellulose fibres are applied with a weight fraction of 10% to 90% of the overall mass of the board-like material (40), and the film or films (10, 20, 30) make up the respective balance of the overall mass.

11. Method according to any of the preceding claims, **characterized in that** the intermediate is comminuted to give granules (50) having defined dimensions.

12. Method according to any of the preceding claims, **characterized in that** the granules (50) are punched out, sawn out, cut out or broken out from the board-like material (40).

## Revendications

1. Procédé de réalisation d'un granulé pouvant être extrudé (50), dans lequel au moins un film (10, 20, 30) et des particules de lignocellulose (11, 12) sont pressés ensemble, de telle sorte que ledit au moins un film (10, 20, 30) fond et se lie avec les particules de lignocellulose (11, 12) pour donner un matériau en forme de plaque (40), et le matériau en forme de plaque (40) est transformé en un granulé (50),
**caractérisé en ce que**
plusieurs couches de particules de lignocellulose (11, 12) sont transformées et deux couches de particules de lignocellulose (11, 12) sont séparées l'une de l'autre par au moins un film (10, 20, 30).

2. Procédé selon la revendication 1, **caractérisé en ce que** l'on utilise à titre de particules de lignocellulose (11, 12) des fibres de bois, des fibres de chanvre, des copeaux, des poussières et/ou des matières recyclées contenant de la lignocellulose.

3. Procédé selon l'une des revendications précédentes, **caractérisé en ce que** l'on saupoudre une couche de particules de lignocellulose (11, 12) sur un film (30, 20) et on la recouvre avec au moins un autre film (20, 10).

4. Procédé selon l'une des revendications précédentes, **caractérisé en ce que** l'on saupoudre les particules de lignocellulose (11, 12) par des têtes de saupoudrage (111, 121) sur le film (30, 20) transporté dans une direction de transport.

5. Procédé selon la revendication 4, **caractérisé en ce que** l'on dépose les particules de lignocellulose (11, 12) par des têtes de saupoudrage (111, 121) agencées les unes derrière les autres en direction de transport.

6. Procédé selon l'une des revendications précédentes, **caractérisé en ce que** l'on utilise plusieurs films différents (10, 20, 30) les uns au-dessus des autres ou séparés les uns des autres par des particules de lignocellulose (11, 12).

7. Procédé selon l'une des revendications précédentes, **caractérisé en ce qu'**avant de saupoudrer les particules de lignocellulose (11, 12), on leur ajoute un agent adhésif, une colle et/ou un agent retardateur de flammes.

8. Procédé selon l'une des revendications précédentes, **caractérisé en ce que** l'on réalise le matériau en forme de plaque (40) dans une presse à rouleaux ou dans une presse à bande (2, 3) an apportant de l'énergie thermique.

9. Procédé selon l'une des revendications précédentes, **caractérisé en ce que** le film (10, 20, 30) est un film en matière thermoplastique à base de polyoléfines ou de polycondensats ou un film à base de matières naturelles ou de matières bioplastiques.

10. Procédé selon l'une des revendications précédentes, **caractérisé en ce que** l'on dépose des fibres de lignocellulose en une proportion pondérale de 10 % à 90 % de la masse totale du matériau en forme de plaque (40), et le film ou les films (10, 20, 30) représentent respectivement le reste de la masse totale.

11. Procédé selon l'une des revendications précédentes, **caractérisé en ce que** l'on fragmente le produit intermédiaire pour donner un granulé (50) de dimensions définies.

12. Procédé selon l'une des revendications précédentes, **caractérisé en ce que** le granulé (50) est poinçonné, scié, coupé ou rompu à partir du matériau en forme de plaque (40).
